**Europäisches Patentamt**

**European Patent Office**

**Office européen des brevets**

(11) Veröffentlichungsnummer: **0 144 843**

**A2**

# (12) EUROPÄISCHE PATENTANMELDUNG

(21) Anmeldenummer: **84113912.4**

(22) Anmeldetag: **16.11.84**

(51) Int. Cl.⁴: **H 02 P 8/00**

(30) Priorität: **02.12.83 DE 3343716**

(43) Veröffentlichungstag der Anmeldung:
**19.06.85 Patentblatt 85/25**

(84) Benannte Vertragsstaaten:
**AT BE CH DE FR GB IT LI NL SE**

(71) Anmelder: **COMPUTER GESELLSCHAFT KONSTANZ MBH
Max-Stromeyer-Strasse 116
D-7750 Konstanz(DE)**

(72) Erfinder: **Henle, Harald, Dipl.-Ing.
Franz-Moser-Strasse 10
D-7750 Konstanz 16(DE)**

(72) Erfinder: **Langfeldt, Folkhart, Ing.grad.
Martin-Schleyerstrasse 13a
D-7750 Konstanz 16(DE)**

(74) Vertreter: **Mehl, Ernst, Dipl.-Ing. et al,
Postfach 22 01 76
D-8000 München 22(DE)**

(54) Schaltungsanordung zur Steuerung von Schrittmotoren.

(57) Zur digitalen Steuerung von Schrittmotoren mit Hilfe von entsprechend den verschiedenen Motorbetriebsphasen veränderbaren Impulsfolgen (IF) ist ein durch einen Mikrocomputer (MC) steuerbarer Zähler (Z1) vorgesehen, dessen Untersetzer-Ausgangsfrequenz in Abhängigkeit von in einem Datenspeicher (RAM) bereitgestellten Betriebstabellen veränderbar ist. Zwischen Datenspeicher (RAM) und Zähler (Z1) ist ein FIFO-Pufferspeicher eingeschaltet, der, gesteuert durch ein erstes Schaltwerk (SW1) über eine direkte Speicherzugriffsteuerung (DMA) sequentiell mit Daten aus dem Datenspeicher ladbar ist. Dem Pufferspeicher FIFO und den mit dessen Ausgang verbundenem Zähler (Z1) ist ein zweites Schaltwerk (SW2) zugeordnet, welches sowohl das Laden des Zählers (Z1) als auch den anschließenden Zählvorgang steuert.

./...

FIG 4

Computer Gesellschaft
Konstanz mbH
Max-Stromeyer-Str. 116
7750 Konstanz

Unser Zeichen
VPA 83 P 5 0 0 8 E

Schaltungsanordnung zur Steuerung von Schrittmotoren

Die Erfindung betrifft eine Schaltungsanordnung zur Steuerung von Schrittmotoren nach dem Oberbegriff des Patentanspruchs 1.

Schrittmotorsteuerungen mit digitalem Steuerteil arbeiten in der Weise, daß aus vorgegebenen Daten und Parametern sowie aus Meldeleitungen verschiedene Steuersignale gewonnen werden, die nach Verstärkung in einem Leistungsteil den Schrittmotor in der gewünschten Weise steuern. Neben quasi statischen Signalen für Vorwärts-/Rückwärtslauf, Ein-/Ausschaltung, Start-Stop-Betrieb usw. werden zusätzlich auch Impulsfolgen benötigt, die entsprechend der gewünschten Schrittfrequenz verändert werden. Dabei ist es wichtig, daß diese Impulsfolgen möglichst optimal an die Eigenwerte des Systems, d.h. an das Trägheitsmoment, die Reibung, die kritische und maximale Schrittfrequenz, die Motorleistung usw. angepaßt werden. Um diesbezüglich eine möglichst hohe Genauigkeit der Impulsfolgen bei den verschiedenen Motor-Betriebsphasen - Beschleunigen, Konstantlauf, Bremsen - zu gewährleisten, werden zur Erzeugung dieser Impulsfolgen vorzugsweise Mikroprozessoren verwendet. Eine Steuerschaltung für elektrische Antriebsmotoren unter Verwendung eines Mikrocomputers ist im Prinzip aus der DE-OS 28 33 981 vorbekannt.

Impulsfolgen mit einer maximalen Frequenz von ca. 5 kHz können normalerweise direkt von einem Standard-Mikrocomputer erzeugt werden.

Sta 1 Stl /11.11.83

Oberhalb von 5 kHz sind die Impulsfolgen dagegen nur mit zusätzlicher Hardware, z.B. mit Hilfe eines externen Untersetzer-Zählers realisierbar. Dies geschieht in der Weise, daß in Abhängigkeit vom jeweils eingeschriebenen Wert Takte ausgezählt werden, bis ein Ausgangssignal abgegeben wird. Mit diesem Ausgangssignal wird eine Unterbrechung im Mikroprogramm ausgelöst und der Zähler mit einem neuen Wert geladen usw.. Auf diese Weise können Impulsfolgen bis ca. 10 kHz mit ausreichend hoher Genauigkeit realisiert werden. Damit ist aber der Mikrocomputer bereits so weit ausgelastet, daß wegen der zeitkritischen Unterbrechungsroutinen keine weiteren Realzeit-Aufgaben mit dem gleichen Mikrocomputer erledigt werden können.

Der vorliegenden Erfindung lag daher die Aufgabe zugrunde, eine Mikrocomputersteuerung für Schrittmotore in der Weise zu verbessern, daß Schrittfrequenzen bzw. entsprechende Impulsfolgen bis ca. 50 kHz mit hoher Genauigkeit realisiert werden können, ohne daß an den Mikrocomputer zeitkritische Anforderungen in bezug auf die rechtzeitige Bereitstellung der jeweils erforderlichen Daten für die aktuelle Schrittfrequenz gestellt werden müssen.

Die Lösung dieser Aufgabe ergibt sich erfindungsgemäß durch die kennzeichnenden Merkmale des Patentanspruchs 1. Der Vorteil der erfindungsgemäßen Schaltung resultiert aus der Kombination von direkter Speicherzugriffsteuerung und FIFO-Pufferspeicher. Einerseits ermöglicht die direkte Speicherzugriffsteuerung einen schnellen Transport der Daten vom Mikrocomputer zur Peripherie, und andererseits ergibt sich aufgrund der Tatsache, daß der DMA-Baustein nicht direkt sondern unter Zwischenschaltung eines FIFO-Pufferspeichers, auf den Zähler geschaltet ist, eine zeitliche Entkopplung zwischen Mikrocomputer und der außen vorhandenen Hardware.

Ein Ausführungsbeispiel der Erfindung wird im folgenden anhand der Zeichnung näher beschrieben. Dabei zeigen

FIG 1     das Prinzipschaltbild einer Steuerschaltung für einen Schrittmotor,

FIG 2     die Funktion der Winkelgeschwindigkeit $\omega$ des Schrittmotors über die Zeit t,

FIG 3     prinzipielle Impulsfolgen für die Steuerung des Schrittmotors bei den in FIG 2 dargestellten Betriebsphasen: Beschleunigen, Konstantlauf, Bremsen,

FIG 4     das Blockschaltbild einer mikrocomputergesteuerten Schrittmotor-Steuerschaltung gemäß der Erfindung.

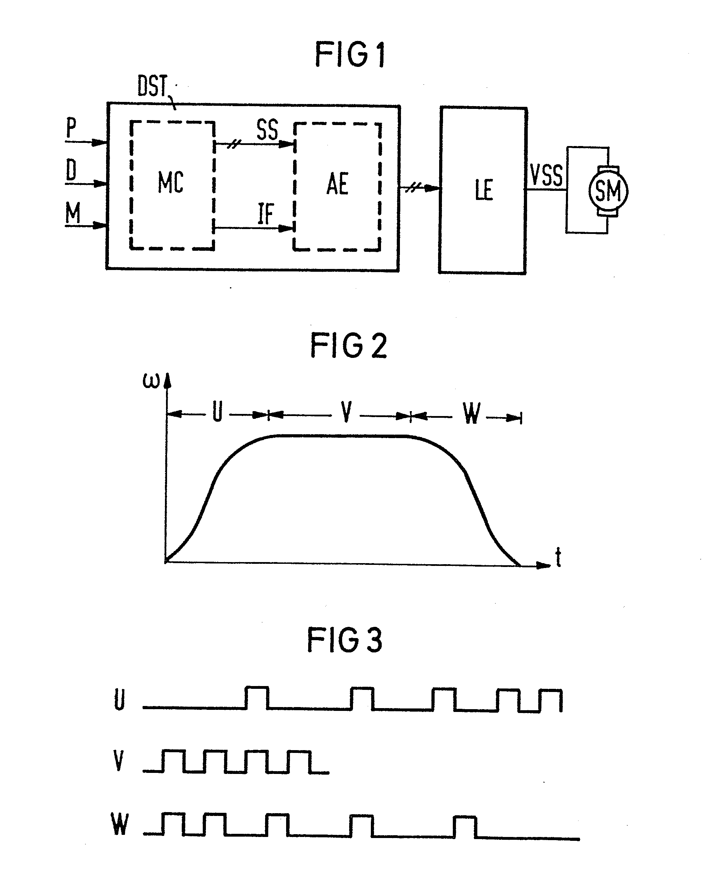

Die in FIG 1 dargestellte Prinzipschaltung für eine Schrittmotorsteuerung besteht aus einem digital arbeitenden Steuerteil DST, der aus vorgegebenen Daten D und Parametern P sowie aus Meldeleitungen M verschiedene Steuersignale bildet und aufbereitet sowie aus einer Leistungselektronik LE. Die verstärkten Steuersignale VSS steuern schließlich den Schrittmotor SM. In einer Mikrocomputereinheit MC des Steuerteils DST werden neben quasi stationären Steuersignalen SS für Vorwärts-/Rückwärtslauf, Ein-/Ausschaltung, Start-Stop-Betrieb usw. zusätzlich Impulsfolgen IF erzeugt, die entsprechend der jeweils erforderlichen Schrittfrequenz verändert werden können. In einer nachfolgenden Aufbereitungseinheit AE werden die Impulsfolgen in Verbin-

dung mit den Steuersignalen zu motorspezifischen Ansteuersignalen umgeformt, die von der Leistungselektronik LE verstärkt werden. Die Verwendung einer Mikrocomputer-Steuerung zur Erzeugung der verschiedenen Impulsfolgen für die Motor-Betriebsphasen: Beschleunigen, Konstantlauf, Bremsen, hat den Vorteil, daß die jeweilige Impulsfolge optimal an die Eigenwerte des Motorsystems, wie Trägheitsmoment, Reibung, kritische Schrittfrequenz, maximale Schrittfrequenz, Motorleistung usw. angepaßt werden kann.

Die Figuren 2 und 3 zeigen die prinzipielle Funktion der Winkelgeschwindigkeit des Schrittmotors über die Zeit t in den Betriebsphasen Beschleunigen U, Konstantlauf V, Bremsen W und die jeweils zugehörigen Impulsfolgen.

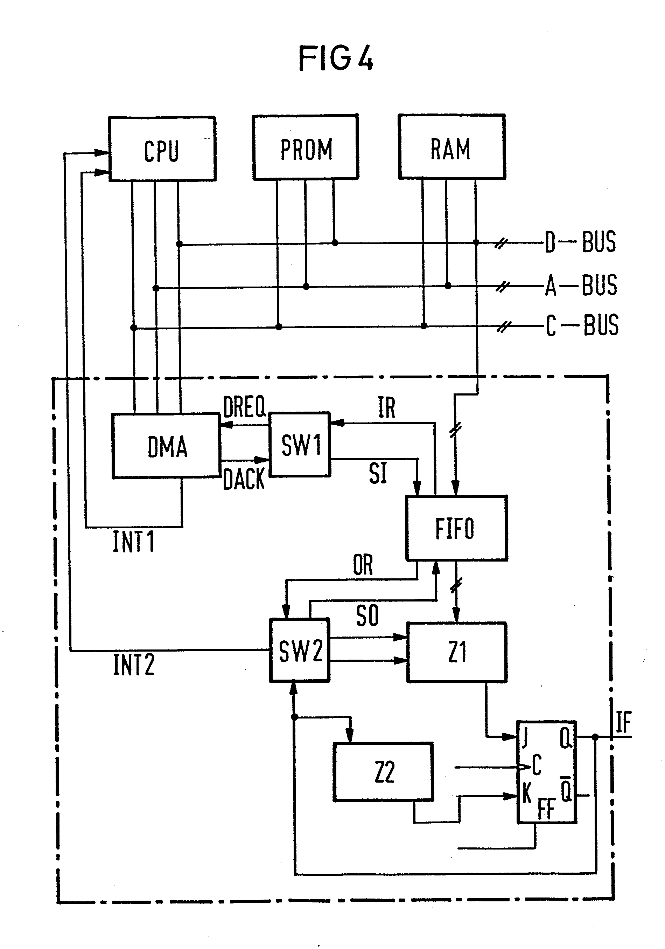

Eine gemäß der Erfindung ausgebildete Schaltung zur Erzeugung dieser Impulsfolgen ist in FIG 4 dargestellt. Die zeigt im oberen Teil einen Mikrocomputer mit einer Zentralprozessoreinheit CPU, einem Programmspeicher PROM und einem Datenspeicher RAM, die untereinander über ein Bus-System, bestehend aus Datenbus D-BUS, Adreßbus A-BUS und Steuerbus C-BUS miteinander vebunden sind. An dieses Bus-System ist eine direkte Speicherzugriffsteuerung DMA angeschlossen, die dazu benutzt wird, Datenbytes aus dem Datenspeicher RAM mit großer Geschwindigkeit direkt an die Peripherie zu transportieren. Im Datenspeicher RAM werden per Software verschiedene Tabellen aufgebaut, z.B. eine Tabelle für Beschleunigungswerte, eine Tabelle für Konstantlaufwerte und eine Tabelle für Bremswerte. Der DMA-Baustein arbeitet im sogenannten Handshake-Verkehr sowohl mit der Zentralprozessoreinheit CPU als auch mit der Peripherie. Dies läuft im einzelnen wie folgt ab: Ein mit dem Datenspeicher RAM verbundener zunächst leerer Pufferspeicher FIFO ist zur Übernahme von Daten bereit und meldet dies über ein Signal INPUT READY - IR an ein erstes Schaltwerk SW1. Dieses Schaltwerk SW1 erzeugt das Datenanforderungssignal DREQ für den DMA-Kanal. Soll eine Impulsfolge erzeugt werden, wird der Kanal des DMA-Bausteines mit Angabe der Betriebsart, der Speicheradresse der Tabelle und der Tabellenlänge initialisiert und gestartet. Aufgrund des Datenanforderungssignals DREQ unterbricht der DMA-Baustein die normalen Aktivitäten der Zentralprozessoreinheit SPU und übernimmt die Steuerung aller Bus-Systeme. Nach der Adressierung des Datenspeichers RAM wird das zu übertragende Datenbyte auf den Datenbus D-BUS geschaltet. Gleichzeitig wird das Steuersignal DACK aktiviert, das dem ersten Schaltwerk SW1 anzeigt, daß das gültige Datenbyte auf dem Datenbus D-BUS zur Verfügung steht. Das erste Schaltwerk SW1 erzeugt daraufhin einen Eingabe-Befehl SHIFT IN - SI für den Pufferspeicher FIFO. Das Datenbyte wird in den Pufferspeicher FIFO übernommen und als Quittung wird das Signal INPUT READY - IR zurückgesetzt. Das erste Schaltwerk SW1 beendet den Eingabebefehl SHIFT IN - SI und nimmt auch das Datenanforderungssignal DREQ zurück. Die Zentralprozessoreinheit CPU erhält die Verfügung über die Bus-Systeme zurück, während das Datenbyte inzwischen durch den Pufferspeicher FIFO geschoben wird. Sobald der Pufferspeicher FIFO ein neues Byte übernehmen kann, wird das Signal INPUT READY - IR neu gesetzt. Nachdem der Pufferspeicher FIFO seinen soeben eingelesenen Wert durchgeschoben hat, liefert er ein Signal OUTPUT READY - OR an ein zweites Schaltwerk SW2. Dieses zweite Schaltwerk SW2 lädt daraufhin den Inhalt des Pufferspeichers FIFO in einen ersten Zähler Z1 und gibt schließlich einen Befehl SHIFT OUT - SO an den Pufferspeicher FIFO zurück. Inzwischen überträgt der DMA-
Baustein bereits die nächsten Tabellenwerte in den
Pufferspeicher FIFO, bis entweder der Pufferspeicher
voll ist, oder das Tabellenende der ersten Tabelle
erreicht ist. Bei vollem Pufferspeicher FIFO wird
der DMA-Baustein nur dann erneut aktiv, wenn im Pufferspeicher durch Auslesen eines Wertes ein Platz
frei wird. Ist eine Teiltabelle abgearbeitet, meldet
sich der DMA-Baustein durch das Unterbrechungssignal
INT1 bei der Zentralprozessoreinheit CPU. Der DMA-
Baustein kann dann für die nächste Teiltabelle initialisiert werden. Nach Abarbeiten der letzten Tabelle durch
den DMA-Baustein wird dieser nicht neu initialisiert.
Die im Pufferspeicher FIFO vorhandenen Werte werden
abgearbeitet bis der Pufferspeicher leer ist, worauf
das Schaltwerk SW2 ein Unterbrechungssignal INT2 an
die Zentralprozessoreinheit CPU weitergibt. Dadurch
wird das Ende eines Steuerzyklus angezeigt. Der Ausgang
des ersten Zählers Z1 ist mit dem Eingang J eines
Flipflops FF verbunden, an dessen Ausgang Q die Impulsfolge IF abgegriffen wird. Der Ausgang Q des Flipflops FF ist ferner mit dem Schaltwerk SW2 sowie mit
einem Steuereingang eines zweiten Zählers Z2 verbunden.
Solange das Flipflop FF nicht gesetzt ist, wird der
zweite Zähler Z2 dauernd auf einen fest eingestellten
Wert geladen. Nach Setzen des Flipflops FF durch den
ersten Zähler Z1 beginnt der zweite Zähler Z2 zu zählen
und setzt das Flipflop über den Eingang K nach der vorgegebenen Zählzeit zurück. Der Zähler Z1 zählt somit die
negative Phase der Impulse und der Zähler Z2 die positive Phase.

Patentansprüche

1. Schaltungsanordnung zur Steuerung von Schrittmotoren mit Hilfe von entsprechend den verschiedenen Motor-Betriebsphasen veränderbaren Impulsfolgen, unter Verwendung eines durch eine Mikrocomputer steuerbaren Zählers, dessen Ausgangsfrequenz in Abhängigkeit von in einem Datenspeicher bereitgestellten Betriebstabellen veränderbar ist, d a d u r c h   g e k e n n z e i c h n e t , daß zwischen Datenspeicher (RAM) und Zähler (Z1) ein nach dem FIFO-Prinzip arbeitender Pufferspeicher (FIFO) eingeschaltet ist, der, gesteuert durch ein erstes Schaltwerk (SW1) über eine direkte Speicherzugriffsteuerung (DMA) sequentiell mit Zählwerten aus dem Datenspeicher (RAM) ladbar ist, daß dem Pufferspeicher (FIFO) und dem mit dem Ausgang des Pufferspeichers verbundenen Zähler (Z1) ein zweites Schaltwerk (SW2) zugeordnet ist, welches sowohl das Laden des Zählers als auch den anschließenden Zählvorgang steuert und daß der Ausgang des Zählers (Z1) mit einem Flipflop (FF) verbunden ist, an dessen Ausgang die Impulsfolgen zur Steuerung des Schrittmotors abgegriffen werden.

2. Schaltungsanordnung nach Anspruch 1, d a d u r c h   g e k e n n z e i c h n e t , daß der Ausgang des Flipflops (FF) sowohl mit dem zweiten Schaltwerk (SW2) als auch mit einem zweiten Zähler (Z2) verbunden ist, und daß der Ausgang des zweiten Zählers (Z2) mit dem zweiten Eingang des Flipflops (FF) verbunden ist.

0144843

1/2

FIG 1

FIG 2

FIG 3

2/2

FIG 4

0144843